# EUROPEAN PATENT SPECIFICATION

(11) **EP 2 981 011 B1**
(45) Date of publication and mention of the grant of the patent: **26.04.2017**
(21) Application number: 15182867.0
(22) Date of filing: 03.02.2012
(51) Int. Cl.: H04J 14/02, H04B 10/293, H04B 10/296

(54) **METHOD AND APPARATUS FOR REGULATING OPTICAL POWER**
VERFAHREN UND VORRICHTUNG ZUR REGELUNG DER OPTISCHEN LEISTUNG
PROCÉDÉ ET APPAREIL DE RÉGULATION DE PUISSANCE OPTIQUE

(30) Priority: 29.07.2011 CN 201110215555
(43) Date of publication of application: 03.02.2016
(62) Divisional of application: 12755623.1
(73) Proprietor: Huawei Technologies Co., Ltd., Longgang District Shenzhen, Guangdong 518129 (CN)
(72) Inventor: HAN, Jianrui, 518129 Shenzhen (CN); SHI, Lei, 518129 Shenzhen (CN); XU, Mingming, 518129 Shenzhen (CN)
(74) Representative: Goddar, Heinz J.

(56) References cited:
- EP-A1- 1 278 326
- EP-A1- 1 744 477
- WO-A2-01/91341
- US-A1- 2007 133 992

## Description

### TECHNICAL FIELD

Embodiments of the present invention relate to communications technologies, and in particular, to a method and apparatus for regulating optical power.

### BACKGROUND

In a wavelength division multiplexing system of an optical network, optical fibers, devices and the like have different physical effects to wavelengths in different frequencies, for example, the gain of an erbium doped fiber amplifier (Erbium Doped Fiber Amplifier, EDFA for short hereinafter) changes as the wavelength changes and the attenuation of an optical fiber also changes as the wavelength changes. Therefore, after service wavelengths are transmitted by a system, performance of different channels becomes unbalanced, resulting in unsatisfactory quality of a received signal. At the same time, performance of other wavelengths is affected when a new wavelength is added or a power value of an existing wavelength in a network is regulated, resulting in degradation in quality of received signal of some service wavelengths in the network. Therefore, to meet signal quality requirements of service wavelengths, it needs to properly set optical parameters in the network.

In a feedback-based regulation manner according to the prior art, a performance detection unit is disposed at a receiving end or an intermediate node of a wavelength division multiplexing system, and the optical power is regulated according to a detection result of the performance detection unit. The regulation manner is usually a step regulation manner, that is, a small step is regulated each time, a detection result is obtained through the performance detection unit, and then it is determined, according to the detection result, whether the regulation in this time reaches a desired objective or whether a performance deterioration appears, until a commissioning objective is reached or according to a detection result, the commissioning is completed.

The foregoing existing technical solution at least has the following problems: the prior art depends on the performance detection unit, but the performance detection unit usually increases network costs, and the step regulation manner may result in low commissioning efficiency and degrade accuracy.
EP 1 278 326 A1 discloses optical signal power levels for selected optical channels processed within an add/drop node in a wavelength division multiplexed (WDM) system that are adjusted as a function of variations in signal power in an incoming WDM signal caused by gain ripple. In particular, a "ripple fitting" method is described whereby the optical signal power of individual optical channels being added at the add/drop node are adjusted to levels that correspond to the ripple profile of other optical channels being routed through the add/drop node. In this manner, the gain ripple in the WDM signal being output from the add/drop node approximately corresponds to the gain ripple in the incoming WDM signal at the node.
EP 1 744 477 A1 discloses a wavelength-division multiplexing transmitter that is capable of enhancing its ability to compensate for a difference in light intensity between wavelengths. The wavelength-division multiplexing transmitter includes an optical branching part for branching a wavelength-division multiplexed input optical signal into a plurality of optical signals, a plurality of wavelength-selective devices for selecting as output wavelengths the wavelengths of each of the optical signals branched by the optical branching part, and an optical coupling part for coupling the output wavelengths respectively output from the plurality of wavelength-selective devices. At least either the branching in the optical branching part or the coupling in the optical coupling part is performed at a power ratio M:N where M and N differ from each other.
WO 01/91341 A2 discloses an optical communication assembly that includes a demultiplexer coupled to an input fiber, a multiplexer coupled to an output fiber and a plurality of optical fibers. Each optical fiber is coupled to one or both of the demultiplexer and multiplexer. A plurality of attenuators are each coupled to an optical fiber in the plurality of optical fibers.

### SUMMARY

The technical solutions of the present invention provide a method of claim 1 and an apparatus of claim 6 for regulating optical power, so as to reduce network costs and improve efficiency and accuracy of optical power regulation.

In one aspect, the present invention provides a method for regulating optical power, where a new service wavelength is added in an optical network and there is no existing service wavelength in the optical network. The method includes:
determining a first power attenuation value of a power regulation unit related to the new service wavelength and in the optical network according to a path of the new service wavelength and a structure of the optical network; and
calculating a performance parameter of a channel corresponding to the new service wavelength according to the first power attenuation value; determining whether the performance parameter of the channel corresponding to the new service wavelength meets a preset tolerance requirement and flatness requirement; and regulating a power attenuation value of the power regulation unit related to the new service wavelength to the first power attenuation value if a judgment result is yes.

In another aspect, the present invention provides another method for regulating optical power, where a new service wavelength is added in an optical network and there is an existing service wavelength in the optical network. The method includes:
determining a first power attenuation value of a power regulation unit related to the new service wavelength and in the optical network and a second power attenuation value of a power regulation unit related to the existing service wavelength and in the optical network according to paths of the new service wavelength and the existing service wavelength and a structure of the optical network; and
calculating a first performance parameter of a channel corresponding to the new service wavelength and a second performance parameter of a channel corresponding to the existing service wavelength according to the first power attenuation value and the second power attenuation value, respectively; determining whether the first performance parameter meets a first preset tolerance requirement and flatness requirement, and determining whether the second performance parameter meets a second preset tolerance requirement and flatness requirement; and regulating a power attenuation value of the power regulation unit related to the new service wavelength to the first power attenuation value if both a first judgment result and a second judgment result are yes.

In another aspect, the present invention provides an apparatus for regulating optical power, where the apparatus is located in an optical network, a new service wavelength is added in the optical network and there is no existing service wavelength in the optical network. The apparatus includes:
a first determination module, configured to determine a first power attenuation value of a power regulation unit related to the new service wavelength and in the optical network according to a path of the new service wavelength and a structure of the optical network;
a first calculation module, configured to calculate a performance parameter of a channel corresponding to the new service wavelength according to the first power attenuation value;
a first judgment module, configured to determine whether the performance parameter of the channel corresponding to the new service wavelength meets a preset tolerance requirement and flatness requirement; and
a first regulation module, configured to regulate a power attenuation value of the power regulation unit related to the new service wavelength to the first power attenuation value if a judgment result of the first judgment module is yes.

In another aspect, the present invention provides another apparatus for regulating optical power, where the apparatus is located in an optical network, a new service wavelength is added in the optical network and there is an existing service wavelength in the optical network. The apparatus includes:
a second determination module, configured to determine a first power attenuation value of a power regulation unit related to the new service wavelength and in the optical network and a second power attenuation value of the power regulation unit related to the existing service wavelength and in the optical network according to paths of the new service wavelength and the existing service wavelength and a structure of the optical network; and
a second calculation module, configured to calculate a first performance parameter of a channel corresponding to the new service wavelength and a second performance parameter of a channel corresponding to the existing service wavelength respectively according to the first power attenuation value and the second power attenuation value;
a second judgment module, configured to determine whether the first performance parameter meets a first preset tolerance requirement and flatness requirement, and determine whether the second performance parameter meets a second preset tolerance requirement and flatness requirement; and
a second regulation module, configured to regulate a power attenuation value of the power regulation unit related to the new service wavelength to the first power attenuation value if both a first judgment result and a second judgment result of the second judgment module are yes.

In a method and an apparatus for regulating optical power according to the technical solutions of the present invention, a performance parameter of a channel corresponding to a service wavelength is calculated according to a determined power attenuation value; if the performance parameter meets a preset tolerance requirement and flatness requirement, a power attenuation value of a power regulation unit is regulated to the determined power attenuation value. Compared with the prior art, the technical solutions do not depend on a performance detection unit, thereby effectively reducing network costs; in addition, because a proper power attenuation value is determined, the technical solutions ensures that performance of the service wavelength in the optical network meets performance requirements and improves the efficiency and accuracy of regulating optical power.

### BRIEF DESCRIPTION OF DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a flow chart of Embodiment 1 of a method for regulating optical power according to the present invention;
FIG. 2 is a flow chart of Embodiment 2 of a method for regulating optical power according to the present invention;
FIG. 3 is a schematic diagram of a topological structure of an optical network in Embodiment 2 of a method for regulating optical power according to the present invention;
FIG. 4 is a flow chart of Embodiment 3 of a method for regulating optical power according to the present invention;
FIG. 5 is a flow chart of Embodiment 4 of a method for regulating optical power according to the present invention;
FIG. 6 is a schematic diagram of a topological structure of an optical network in Embodiment 4 of a method for regulating optical power according to the present invention;
FIG. 7 is a structural diagram of Embodiment 1 of an apparatus for regulating optical power according to the present invention;
FIG. 8 is a structural diagram of Embodiment 2 of an apparatus for regulating optical power according to the present invention;
FIG. 9 is a structural diagram of Embodiment 3 of an apparatus for regulating optical power according to the present invention; and
FIG. 10 is a structural diagram of Embodiment 4 of an apparatus for regulating optical power according to the present invention.

### DESCRIPTION OF EMBODIMENTS

In order to make the objectives, technical solutions, and advantages of the present invention more comprehensible, the technical solutions according to embodiments of the present invention are clearly and completely described in the following with reference to the accompanying drawings. Apparently, the embodiments in the following description are merely a part rather than all of the embodiments of the present invention. All other embodiments obtained by persons of ordinary skills in the art based on the embodiments of the present invention without creative efforts shall fall within the protection scope of the present invention.

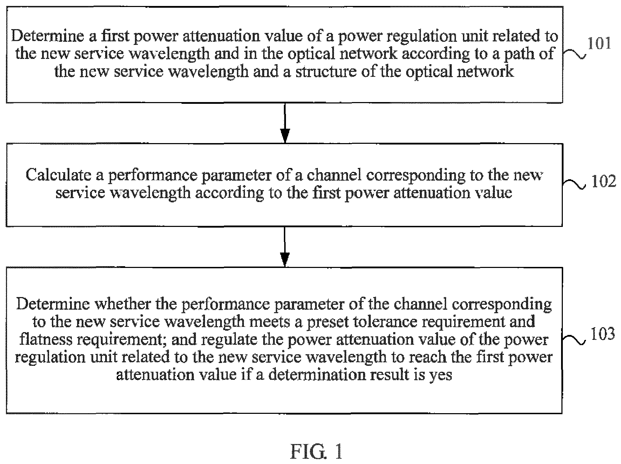

FIG. 1 is a flow chart of Embodiment 1 of a method for regulating optical power according to the present invention. As shown in FIG. 1, this embodiment provides a method for regulating optical power, and this embodiment is applied to: a new service wavelength is added in an optical network and there is no existing service wavelength in the optical network. The method for regulating optical power according to this embodiment may specifically include the following steps.

Step 101: Determine a first power attenuation value of a power regulation unit related to a new service wavelength and in an optical network according to a path of the new service wavelength and a structure of the optical network.

In this embodiment, a new service wavelength is added in the optical network and there is no existing service wavelength. To ensure that signal quality meets requirements after the new service wavelength is added in the optical network, it needs to obtain a proper power attenuation value of the power regulation unit and configure the optical network according to the obtained power attenuation value, before the new service wavelength is actually opened. The power regulation unit herein may specifically include a 40-channel multiplexing board with VOA (40-channel multiplexing board with VOA, M40V for short hereinafter), a 9-port wavelength selective switching demultiplexing board (9-port wavelength selective switching demultiplexing board, WSD9 for short hereinafter), and a 9-port wavelength selective switching multiplexing board (9-port wavelength selective switching multiplexing board, WSM9 for short hereinafter) in the optical network.

In this step, the first power attenuation value of the power regulation unit related to the new service wavelength and in the optical network is determined according to the path of the new service wavelength and the structure of the optical network. For optical power regulation of a single channel, the power regulation unit in the optical network may include one or more of the following: the M40V, the WSD9, and the WSM9, where the determining the first power attenuation value of the power regulation unit may specifically be determining the power attenuation value imposed by the M40V on the new service wavelength, and the power attenuation values imposed by the WSD9 and the WSM9 on the new service wavelength. The first power attenuation value of the power regulation unit in this embodiment may be set to be any value or may be set to be an empirical value; if the first power attenuation value is a proper empirical value, the number of iterations can be reduced subsequently and the efficiency can be improved. Specifically, the first power attenuation value can be determined according to the path through which the new service wavelength passes in the optical network and the structure of the optical network; the path of the new service wavelength in the optical network may be indicated by nodes through which a service signal, transmitted by the new service wavelength when the new service wavelength works in the optical network, passes from input to output, where one or more nodes can usually form an optical network, various types of units can be disposed on each node as required, a power regulation unit may be disposed on one or more nodes, and power regulation units disposed on different nodes may be different. A parameter of another unit connected to a power regulation unit may be first set according to experience, the parameter may include one or more of the following: input optical power, output optical power, and single-channel insertion loss, and the first power attenuation value of the power regulation unit is obtained through input and output connection relationships between them. For example, on a node, an input end of a power regulation unit is connected to a unit 1 and an output end of the power regulation unit is connected to a unit 2; after output optical power of the unit 1 and input optical power of the unit 2 are set, the first power attenuation value of the power regulation unit can be easily obtained, that is, the following condition is met: the output optical power of the unit 1 - the first power attenuation value of the power regulation unit = the input optical power of the unit 2.

Step 102: Calculate a performance parameter of a channel corresponding to the new service wavelength according to the first power attenuation value.

This step specifically is calculating the performance parameter of the channel corresponding to the new service wavelength in the optical network according to the determined first power attenuation value of the power regulation unit; in different actual situations, the power regulation unit in the optical network according to this embodiment may include one or more of the following: the M40V, the WSD9, and the WSM9. In this step, after the first power attenuation value of the power regulation unit is determined, a model of the optical network can be simulated; the optical power of the channel corresponding to the new service wavelength can be obtained in a manner of simulation calculation and then the performance parameter of the channel corresponding to the new service wavelength is calculated. The performance parameter herein may be one of or a combination of the following: an optical signal noise rate (Optical Signal Noise Rate, OSNR for short hereinafter) of the service wavelength, an OSNR margin, a bit error rate, a Q factor, and the like.

Step 103: Determine whether the performance parameter of the channel corresponding to the new service wavelength meets a preset tolerance requirement and flatness requirement; and regulate the power attenuation value of the power regulation unit related to the new service wavelength to the first power attenuation value if a judgment result is yes.

After the performance parameter of the channel corresponding to the new service wavelength is obtained by the calculation in the foregoing steps, the performance of the channel is evaluated according to the performance parameter, that is, it is determined whether the performance parameter of the channel corresponding to the new service wavelength meets the preset tolerance requirement and flatness requirement; and if a judgment result is yes, that is, the performance parameter of the channel corresponding to the new service wavelength meets the preset tolerance requirement and flatness requirement, the power attenuation value of the power regulation unit related to the new service wavelength is regulated to make the power attenuation value reach the first power attenuation value. The tolerance requirement may specifically be whether a performance parameter value in a calculation is greater than a preset performance parameter threshold, and the flatness requirement is whether performance parameter values calculated in multiple calculations tend to be stable, that is, whether the difference between the performance parameter values is smaller than a preset difference threshold.

Furthermore, the method for regulating optical power according to this embodiment may further include the following steps: if the judgment result is no, modify the first power attenuation value, and recalculate the performance parameter until the calculated performance parameter meets the preset tolerance requirement and flatness requirement; obtain a modified second power attenuation value, and regulate the power attenuation value of the power regulation unit related to the new service wavelength to the second power attenuation value. If the performance parameter, calculated according to the first power attenuation value, of the channel corresponding to the new service wavelength does not meet the preset tolerance requirement and flatness requirement, the first power attenuation value is modified, and the performance parameter is recalculated according to the modified power attenuation value; then it is further determined whether the recalculated performance parameter meets the tolerance requirement and the flatness requirement, until the calculated performance parameter can meet the tolerance requirement and flatness requirement. At this time, the modified second power attenuation value is obtained, where the new performance parameter corresponding to the second power attenuation value meets the tolerance requirement and the flatness requirement; then the power attenuation value of the power regulation unit related to the new service wavelength is regulated to make the power attenuation value reach the second power attenuation value.

In this embodiment, the second power attenuation value corresponding to the performance parameter meeting the tolerance requirement and the flatness requirement may be obtained in a manner of iterative modification, and then the power attenuation value of the power regulation unit is regulated to the second power attenuation value. For the modification of the power attenuation value, the scale of the modification may be usually determined according to experience or by using a heuristic algorithm. For the path of the new service wavelength, there are multiple power regulation units on the path; all the power regulation units may be regulated, and in this case, a power attenuation value which needs to be regulated for each power regulation unit is obtained according to the method of this embodiment; or, one or more of the power regulation units may be regulated, and in this case, a power attenuation value which needs to be regulated for one or more power regulation units is obtained according to the method of this embodiment.

This embodiment is for an application scenario in which a new service wavelength is added in the optical network and there is no existing service wavelength in the optical network. Compared with the prior art, this embodiment does not depend on a performance detection unit, thereby effectively reducing network costs. In addition, in this embodiment, a proper power attenuation value is determined by setting an empirical value or in a manner of iterative modification, thereby ensuring that performance of the service wavelength in the optical network meets the performance requirements and at the same time, improving the efficiency and accuracy of regulating the optical power.

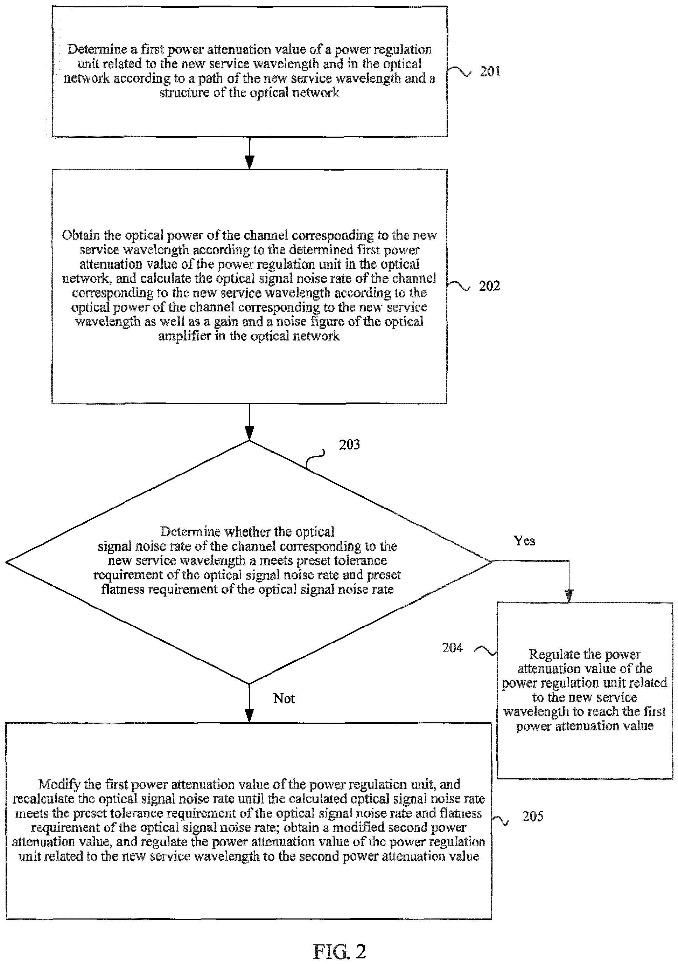

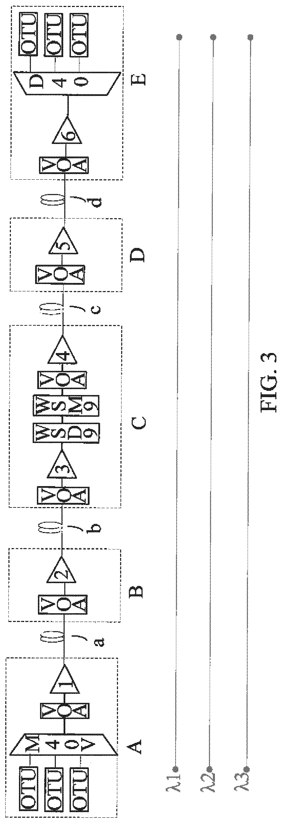

FIG. 2 is a flow chart of Embodiment 2 of a method for regulating optical power according to the present invention; as shown in FIG. 2, this embodiment provides a method for regulating optical power. FIG. 3 is a schematic diagram of a topological structure of an optical network in Embodiment 2 of the method for regulating optical power according to the present invention; as shown in FIG. 3, the method for regulating optical power according to this embodiment is specifically described through a scenario shown in FIG 3, which is taken as an example and mainly is a scenario of a new service wavelength in initial status, where numerals 1, 2, 3, 4, 5, and 6 in FIG. 3 represent optical amplifiers, and the optical amplifiers are configured to implement functions of amplifying optical signals. As shown in FIG. 3, A, B, C, D, and E are five nodes, where the nodes B and D are optical line amplifier (Optical Line Amplifier, OLA for short hereinafter) nodes, the nodes A and E are optical terminal multiplexer (Optical Terminal Multiplexer, OTM for short hereinafter) nodes, and the node C is a reconfigurable optical add-drop multiplexer (Reconfigurable Optical Add-Drop Multiplexer, ROADM for short hereinafter) node. The a, b, c, and d represent optical connections between different nodes, and set lengths of all optical fibers are 80 km herein. The node A mainly includes an optical transponder unit (Optical Transponder Unit, OTU for short hereinafter), a variable optical attenuator (Variable Optical Attenuator, VOA for short hereinafter), an M40V, and a No. 1 optical amplifier. A service signal which needs to be transmitted is input through the OTU and converted into an optical signal which has a standard wavelength and complies with WDM system requirements. The M40V multiplexes at most 40 paths of optical signals, which have standard wavelengths and comply with the WDM system requirements, into one path of multiplexed signal, and can regulate input optical power of each channel. The VOA can implement regulation of total optical power of input optical signals. The node B includes a VOA and a No. 2 optical amplifier. The node C includes a VOA, a WSD9, a WSM9, a No. 3 optical amplifier, and a No. 4 optical amplifier. The WSD9 and the WSM9 are used in conjunction with each other to implement wavelength scheduling in a WDM network node, and each board can regulate output optical power of each channel. The node D includes a VOA and a No. 5 optical amplifier. The node E includes a VOA, a 40-channel demultiplexing board (40-channel demultiplexing board, D40 for short hereinafter), an OTU, and a No. 6 optical amplifier. The D40 is configured to demultiplex one path of optical signal into at most 40 paths of optical signals which have standard wavelengths and comply with the WDM system requirements.

In this embodiment, it is assumed that a user needs to open three new service wavelengths, which are service wavelengths λ1, λ2, and λ3, respectively, and a path that is passed through is A-B-C-D-E. A specific path of the service wavelengths λ1, λ2, and λ3 is as follows: Service signals are input through three OTU boards of the node A and are multiplexed through the M40V into one path of signal where optical power of a signal of each channel can be modified through the M40V during the multiplexing, then signal amplification is performed by the No. 1 optical amplifier where the total optical power can be regulated by the VOA before the signal amplification; then the signal is transmitted through the long fiber a and reaches the node B where the optical power of the signal decreases after the signal is transmitted through the long fiber, and the signal is amplified by the No. 2 optical amplifier of the node B, where likewise, the total optical power can be regulated by the VOA before the amplification; then, the signal reaches the node C after the signal is transmitted through the long fiber, and wavelength selection is performed on the signal by the WSD9 and the WSM9 after the signal is amplified on the node C, where during the wavelength selection, optical power of each channel can be regulated and the total optical power can also be regulated by the VOA before the signal amplification; then, the signal is transmitted to the node D after the signal is amplified by the No. 4 optical amplifier and then reaches the node E, where the total optical power can be regulated by the VOA after the signal amplification; the signal is demultiplexed by the D40 on the node E into three paths of wavelength signals and the three paths of wavelength signals are sent to three OTU boards, respectively, where the total optical power can also be regulated by the VOA before the signal amplification.

Generally, the regulation of the signal is classified into regulation of total optical power of a line and regulation of optical power of a single channel corresponding to a service wavelength, where the total optical power is regulated by the VOA unit shown in the drawing, and the optical power of the single channel can be regulated through the M40V, the WSD9, and the WSM9 shown in FIG. 3. The regulation of the total optical power of the line and the regulation of the optical power of the single channel may be sequential regulation or loop regulation, that is, the total optical power of the line can be regulated first, and then the optical power of the single channel is regulated. Or, the total optical power of the line can be regulated first, then the optical power of the single channel is regulated, and then the total optical power of the line and the optical power of the single channel are optimized. The regulation of the total optical power of the line belongs to the prior art and is operated easily, and therefore, details are not described in the specification. The description herein focuses on the regulation of the optical power of the single channel.

Specifically, the method for regulating optical power according to this embodiment may specifically include the following steps.

Step 201: Determine a first power attenuation value of a power regulation unit related to a new service wavelength and in an optical network according to a path of the new service wavelength and a structure of the optical network.

Further referring to FIG. 3, it can be known from the foregoing analysis that, for the power regulation of the single channel, the power regulation units in the optical network include the M40V in the node A and the WSD9 and the WSM9 in the node C, and regulation values of the power regulation units are the power attenuation values, imposed by the M40V, of the three channels corresponding to the service wavelengths λ1, λ2, and λ3, and the power attenuation values, imposed by the WSD9 and the WSM9, of the three channels corresponding to the service wavelengths λ1, λ2, and λ3. In this step, the first power attenuation value of the power regulation unit is determined according to the path of the new service wavelength and the structure of the optical network. Similar to step 101, a parameter of another unit connected to the power regulation unit is set according to experience. Specifically, for the node A, after a regulation value of a multiplexed power regulation point is determined, the regulation value of the VOA is known; in this embodiment, it may be assumed that the regulation value of the VOA is 5 dB. It is assumed that single-wave typical input optical power of the No. 1 optical amplifier is known and is assumed to be -19 dBm, a single-channel insertion loss value of the M40V can also be obtained in advance and is assumed to be 6 dB, and transmitted optical power of the OTU board is also known and assumed to be -2 dBm, so that the power attenuation values, imposed by the M40V, of the three channels corresponding to the service wavelengths λ1, λ2, and λ3 can be calculated according to the following formula: the transmitted optical power of the OTU board - a first power attenuation value of the M40V - the single-channel insertion loss value of the M40V - the regulation value of the VOA = the single-wave typical input optical power of the No. 1 optical amplifier, that is, -2 - the first power attenuation value of the M40V - 6 - 5 = -19; therefore, it is obtained that all of the first power attenuation values imposed by the M40V on the service wavelengths λ1, λ2, and λ3 are 6 dB. For the node C, the regulation value of the VOA disposed in front of the No. 4 optical amplifier is determined after multiplexing commissioning is completed, and is assumed to be 3 dB; it is assumed that single-wave typical output optical power of the No. 3 optical amplifier is +1 dBm, it is assumed that single-wave typical input optical power of the No. 4 optical amplifier is -19 dBm, and it is assumed that single-channel insertion loss values of the WSD9 and WSM9 boards can also be obtained in advance and are assumed to be 6 dB, so that the power attenuation values, imposed by the WSD9 and the WSM9, of the three channels corresponding to the service wavelengths λ1, λ2, and λ3 can be calculated according to the following formula: the single-wave typical output optical power of the No. 3 optical amplifier - (first power attenuation values of the WSD9 and WSM9 boards) - (the single-channel insertion loss values of the WSD9 and WSM9 boards) - the regulation value of the VOA = the single-wave typical input optical power of the No. 4 optical amplifier, that is, +1 - (the first power attenuation values of the WSD9 and WSM9 boards) -6 - 6 - 3 = -19, and therefore, it is obtained that all the first power attenuation values imposed by the WSD9 and WSM9 boards on the service wavelengths λ1, λ2, and λ3 are 5 dB. The WSD9 and the WSM9 can share the first power attenuation values on average or according to a certain proportion, for example, all the first power attenuation values imposed by the WSD9 on the service wavelengths λ1, λ2, and λ3 are set to 5 dB, and all the first power attenuation values imposed by the WSM9 on the service wavelengths λ1, λ2, and λ3 are set to 0 dB herein.

Step 202: Obtain the optical power of the channel corresponding to the new service wavelength according to the determined first power attenuation value of the power regulation unit in the optical network, and calculate an optical signal noise rate of the channel corresponding to the new service wavelength according to the optical power of the channel corresponding to the new service wavelength as well as a gain and a noise figure of the optical amplifier in the optical network.

After the first power attenuation value of the power regulation unit in the optical network is obtained through the foregoing steps, optical power of a channel corresponding to each new service wavelength is obtained according to a location relationship of units in the optical network as well as a path of each input service wavelength, a frequency of the service wavelength, and parameters of optical fibers and devices which the service wavelength passes through. The foregoing units may specifically include an OTU, an M40V, a VOA, a WSD9, a WSM9, and an optical amplifier in the optical network, optical fiber parameters may be, for example, an optical fiber type and an optical fiber length, and device parameters may be, for example, a type and a gain spectrum of an EDFA board. When optical power of a channel corresponding to each new service wavelength is obtained, if the gain and the noise figure of an optical amplifier for different service wavelengths are known, an optical signal noise rate of a channel corresponding to each new service wavelength can be calculated accordingly, where the optical signal noise rate can be obtained by using the existing method for calculating an optical signal noise rate. The gain and noise figure of the optical amplifier can be obtained in various manners, for example, a device model can be established for the optical amplifier, and the gain and noise figure under specific power can be calculated when a reference gain spectrum and noise spectrum are known. Therefore, in this embodiment, it may be assumed that the gain spectrum and the noise spectrum models of the optical amplifier are known, and the optical signal noise rates of the three channels corresponding to the service wavelengths λ1, λ2, and λ3 can be calculated according to the gain spectrum and the noise spectrum models.

It should be noted that the solution of the present invention is described through an example in which the OSNR is used as an performance parameter in this embodiment; persons skilled in the art can understand that one of the OSNR margin, the bit error rate, the Q factor, and the like or a combination of the OSNR, the OSNR margin, the bit error rate, the Q factor, and the like may also be used as performance parameters; the method is similar to that using the OSNR and the details are not described herein again. Methods for calculating the OSNR margin, the bit error rate, and the Q factor are briefly illustrated in the following. For the OSNR margin, the optical power of the channel corresponding to the new service wavelength can be obtained according to the determined power attenuation value, and an OSNR penalty corresponding to each new service is calculated according to parameters related to the path of the new service wavelength such as device parameters, an optical fiber type, a code type of each channel, and residual chromatic dispersion and by taking various linear physical damages and non-linear physical damages into account. The linear damages may include one or more of the following factors: chromatic dispersion (Chromatic Dispersion, CD for short hereinafter), polarization mode dispersion (Polarization Mode Dispersion, PMD for short hereinafter), crosstalk (Crosstalk, Xtalk for short hereinafter), and a filter cascade; the non-linear damages may include one or more of the following factors: self phase modulation (Self Phase Modulation, SPM for short hereinafter), cross-phase modulation (Cross-Phase Modulation, XPM for short hereinafter), four-wave mixing (Four-Wave Mixing, FWM for short hereinafter), stimulated Brillouin scattering (Stimulated Brillouin Scattering, SBS for short hereinafter), and stimulated Raman scattering (Stimulated Raman Scattering, SRS for short hereinafter). After the OSNR penalty is calculated, the OSNR margin can further be obtained through the OSNR penalty and the OSNR. Similarly, the bit error rate and the Q factor can be calculated through the foregoing parameters, so that the bit error rate or the Q factor is used as a parameter for evaluating service performance.

Step 203: Determine whether the optical signal noise rate of the channel corresponding to the new service wavelength meets a preset tolerance requirement of the optical signal noise rate and a preset flatness requirement of the optical signal noise rate; if the judgment result is yes, perform step 204, and if the judgment result is no, perform step 205.

In this embodiment, an optical signal noise rate of a channel corresponding to each new service wavelength calculated in foregoing step 202 is used as a performance parameter for evaluating the performance of the channel, and this step is determining whether the optical signal noise rate of each channel obtained by the foregoing calculation meets the preset tolerance requirement of the optical signal noise rate and the flatness requirement of the optical signal noise rate. It is assumed that, based on the first power attenuation value, obtained in step 201, of the power regulation unit in the optical network, the optical signal noise rates, calculated through the foregoing steps, of a receiving end on the node E are 22 dB, 24 dB, and 26 dB. It is determined whether the optical signal noise rate obtained by the foregoing calculation meets the preset tolerance requirement of the optical signal noise rate and the flatness requirement of the optical signal noise rate, for example, it is preset that a tolerance value of the optical signal noise rate is not smaller than 15 dB and a flatness value of the optical signal noise rate is smaller than 1 dB; if the requirements are met, perform step 204, and if the requirements are not met, perform step 205 to modify the power attenuation value of the power regulation unit and then calculate a new optical signal noise rate.

Step 204: Regulate the power attenuation value of the power regulation unit related to the new service wavelength to the first power attenuation value.

If the optical signal noise rate, obtained based on the first power attenuation value, of the channel corresponding to the new service wavelength meets the preset tolerance requirement of the optical signal noise rate and the flatness requirement of the optical signal noise rate, the power attenuation value of the power regulation unit related to the new service wavelength is directly regulated to the first power attenuation value.

Step 205: Modify the first power attenuation value of the power regulation unit, and recalculate the optical signal noise rate until the calculated optical signal noise rate meets the preset tolerance requirement of the optical signal noise rate and the preset flatness requirement of the optical signal noise rate; obtain a modified second power attenuation value, and regulate the power attenuation value of the power regulation unit related to the new service wavelength to the second power attenuation value.

If the optical signal noise rate calculated according to the foregoing steps does not meet the preset tolerance requirement of the optical signal noise rate and the flatness requirement of the optical signal noise rate, for example, the calculated tolerance value of the optical signal noise rate related to the new service wavelength is 13 dB and is smaller than the preset tolerance value 15 dB, and correspondingly, the flatness of the optical signal noise rate is 2 dB and is greater than the preset flatness 1 dB, it obviously needs to modify the power attenuation value of the power regulation unit, where the power attenuation value of one or more power regulation units may be modified or the power attenuation values of all power regulation units may be modified at the same time. For example, the power attenuation value of one or more power regulation units may be modified in a step of +/-0.2 dB based on the first power attenuation value, and then the optical signal noise rate is recalculated, until a new optical signal noise rate meeting the preset tolerance requirement of the optical signal noise rate and the preset flatness requirement of the optical signal noise rate is obtained, so as to obtain a modified power attenuation value corresponding to the new optical signal noise rate. Usually, it needs to obtain, in a manner of iterative modification, the power attenuation value corresponding to the new optical signal noise rate meeting the tolerance requirement of the optical signal noise rate and the flatness requirement of the optical signal noise rate.

Through the foregoing iteration process, if an obtained optical signal noise rate of each channel meets the preset tolerance requirement of the optical signal noise rate and the flatness requirement of the optical signal noise rate, a modified second power attenuation value is obtained where the second power attenuation value is the foregoing modified power attenuation value corresponding to the optical signal noise rate meeting the requirements, and the power attenuation value of the power regulation unit related to the new service wavelength is regulated to the second power attenuation value. For example, if it is assumed that optical signal noise rates, obtained through 100 times of iteration and meeting performance requirements, of three channels corresponding to the service wavelengths λ1, λ2, and λ3 are 25.5 dB, 25 dB, and 25.8 dB, respectively, power attenuation values, used for calculating a combination of the optical signal noise rates, of the power regulation unit are as follows: the power attenuation values imposed by the M40V in the node A on the service wavelengths λ1, λ2, and λ3 are 4.2, 5.5, and 6.0, the power attenuation values imposed by the WSD9 in the node C on the service wavelengths λ1, λ2, and λ3 are 5.0, 4.8, and 4.9, and all the power attenuation values imposed by the WSM9 on the service wavelengths λ1, λ2, and λ3 are 0, and at this time, a second power attenuation value of each power regulation unit can be obtained.

In this embodiment, for a case in which a size of a network is great and the number of wavelengths is great, the second power attenuation value corresponding to the performance parameter meeting requirements can also be obtained through the foregoing iteration process, so as to implement the regulation of the optical power.

This embodiment is for an application scenario in which a new service wavelength is added in the optical network and there is no existing service wavelength in the optical network. Compared with the prior art, this embodiment does not depend on a performance detection unit, thereby effectively reducing network costs. In addition, in this embodiment, a proper power attenuation value is determined by setting an empirical value or in a manner of iterative modification, thereby ensuring that performance of the service wavelength in the optical network meets the performance requirements and at the same time, improving the efficiency and accuracy of regulating the optical power.

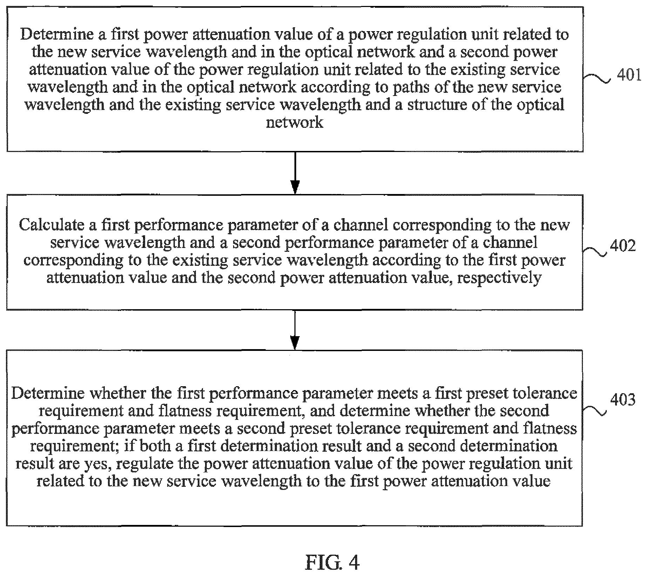

FIG. 4 is a flow chart of Embodiment 3 of a method for regulating optical power according to the present invention. As shown in FIG. 4, this embodiment provides a method for regulating optical power, and in this embodiment, a new service wavelength is added in an optical network and there is an existing service wavelength in the optical network. The method for regulating optical power according to this embodiment may specifically include the following steps.

Step 401: Determine a first power attenuation value of a power regulation unit related to a new service wavelength and in an optical network and a second power attenuation value of a power regulation unit related to an existing service wavelength and in the optical network according to paths of the new service wavelength and the existing service wavelength and a structure of the optical network.

In this embodiment, there is an existing service wavelength in the optical network and a new service wavelength is added. To ensure that signal quality of the existing service wavelength and the new service wavelength meets requirements after the new service wavelength is added in the optical network, before the new service wavelength is actually opened, it needs to obtain a proper power attenuation value of a power regulation unit after the new service wavelength is added in the optical network, and to configure the optical network according to the obtained power attenuation value. This step is determining the first power attenuation value of the power regulation unit related to the new service wavelength and in the optical network and the second power attenuation value of the power regulation unit related to the existing service wavelength and in the optical network according to the paths of the new service wavelength and the existing service wavelength and the structure of the optical network; the specific method is similar to those in foregoing step 101 and step 201, and the details are not described herein again.

Step 402: Calculate a first performance parameter of a channel corresponding to the new service wavelength and a second performance parameter of a channel corresponding to the existing service wavelength according to the first power attenuation value and the second power attenuation value, respectively.

This step specifically is calculating the first performance parameter of the channel corresponding to the new service wavelength in the optical network according to the determined first power attenuation value and second power attenuation value of the power regulation unit, and likewise, calculating the second performance parameter of the channel corresponding to the existing service wavelength in the new optical network according to the determined first power attenuation value and second power attenuation value of the power regulation unit. In this step, after the first power attenuation value and the second power attenuation value of the power regulation unit are determined, a model of the optical network can be simulated; the optical power of the channel corresponding to the new service wavelength and the optical power of the channel corresponding to the existing service wavelength can be obtained in a manner of simulation calculation, and then the first performance parameter of the channel corresponding to the new service wavelength and the second performance parameter of the channel corresponding to the existing service wavelength are calculated. The first performance parameter or the second performance parameter herein may be one of or a combination of the following: an optical OSNR, an OSNR, margin, a bit error rate, a Q factor of each service wavelength.

Step 403: Determine whether the first performance parameter meets a first preset tolerance requirement and flatness requirement, and determine whether the second performance parameter meets a second preset tolerance requirement and flatness requirement; if both a first judgment result and a second judgment result are yes, regulate the power attenuation value of the power regulation unit related to the new service wavelength to the first power attenuation value.

After the first performance parameter and the second performance parameter are obtained by the calculation in the foregoing steps, the performance of the channel is evaluated according to the first performance parameter and the second performance parameter, that is, it is determined whether the first performance parameter of the channel corresponding to the new service wavelength meets the first preset tolerance requirement and flatness requirement and whether the second performance parameter of the channel corresponding to the existing service wavelength meets the second preset tolerance requirement and flatness requirement. In this embodiment, the first judgment result is a judgment result indicating whether the first performance parameter meets the first preset tolerance requirement and flatness requirement, and the second judgment result is a judgment result indicating whether the second performance parameter meets the second preset tolerance requirement and flatness requirement. If both the first judgment result and the second judgment result are yes, that is, the first performance parameter of the channel corresponding to the new service wavelength meets the preset tolerance requirement and flatness requirement and the second performance parameter of the channel corresponding to the existing service wavelength meets the second preset tolerance requirement and flatness requirement, the power attenuation value of the power regulation unit related to the new service wavelength is regulated to make the power attenuation value to the first power attenuation value. The first preset tolerance requirement and flatness requirement in this embodiment are preset requirements for ensuring the performance of the new service wavelength, and are related to the new service wavelength; the second preset tolerance requirement and flatness requirement are preset requirements for ensuring that the performance of the existing service wavelength is not affected after the new service wavelength is added, and are related to the existing service wavelength. The first preset tolerance requirement and flatness requirement may be consistent with the second preset tolerance requirement and flatness requirement, or the first preset tolerance requirement and flatness requirement may be inconsistent with the second preset tolerance requirement and flatness requirement. The tolerance requirement may specifically be whether a performance parameter value in a calculation is greater than a preset performance parameter threshold, and the flatness requirement is whether performance parameter values calculated in multiple calculations tend to be stable, that is, the difference between the performance parameter values is smaller than a preset difference threshold.

Furthermore, the method for regulating optical power according to this embodiment may further include the following steps: if the judgment result is one or more of the following: the first judgment result is no and the second judgment result is no, modify the first power attenuation value, and recalculate the performance parameter until a calculated third performance parameter meets the first preset tolerance requirement and flatness requirement and a calculated fourth performance parameter meets the second preset tolerance requirement and flatness requirement; and obtain a modified third power attenuation value, and regulate the power attenuation value of the power regulation unit related to the new service wavelength to the third power attenuation value; if the judgment result is one or more of the following: the first judgment result is no and the second judgment result is no, modify the first power attenuation value, and recalculate, according to the modified power attenuation value, the performance parameter until the calculated third performance parameter meets the first preset tolerance requirement and flatness requirement and the calculated fourth performance parameter meets the second preset tolerance requirement and flatness requirement, where the third performance parameter is related to the new service wavelength, and the fourth performance parameter is related to the existing service wavelength; at this time, obtain the modified third power attenuation value, and then regulate the power attenuation value of the power regulation unit related to the new service wavelength to make the power attenuation value reach the third power attenuation value.

Furthermore, the method for regulating optical power according to this embodiment may further include the following steps: if the judgment result is one or more of the following: the first judgment result is no and the second judgment result is no, modify the second power attenuation value, and recalculate the performance parameter until a calculated fifth performance parameter meets the first preset tolerance requirement and flatness requirement and a calculated sixth performance parameter meets the second preset tolerance requirement and flatness requirement; and obtain a modified fourth power attenuation value, and regulate the power attenuation value of the power regulation unit related to the existing service wavelength to the fourth power attenuation value; if the judgment result is one or more of the following: the first judgment result is no and the second judgment result is no, modify the second power attenuation value, and recalculate, according to the modified power attenuation value, the performance parameter until a calculated fifth performance parameter meets the first preset tolerance requirement and flatness requirement and a calculated sixth performance parameter meets the second preset tolerance requirement and flatness requirement, where the fifth performance parameter is related to the new service wavelength, and the sixth performance parameter is related to the existing service wavelength; at this time, obtain the modified fourth power attenuation value, and then regulate the power attenuation value of the power regulation unit related to the existing service wavelength to make the power attenuation value reach the fourth power attenuation value.

Furthermore, the method for regulating optical power according to this embodiment may further include the following steps: if the judgment result is one or more of the following: a first judgment result is no and a second judgment result is no, modify the first power attenuation value and the second power attenuation value, and recalculate the performance parameter until a calculated seventh performance parameter meets the first preset tolerance requirement and flatness requirement and a calculated eighth performance parameter meets the second preset tolerance requirement and flatness requirement; and obtain a modified fifth power attenuation value and sixth power attenuation value, and regulate the power attenuation value of the power regulation unit related to the new service wavelength to the fifth power attenuation value and regulate the power attenuation value of the power regulation unit related to the existing service wavelength to the sixth power attenuation value; if the judgment result is one or more of the following: the first judgment result is no and the second judgment result is no, modify the first power attenuation value and the second power attenuation value, and recalculate, according to the modified power attenuation values, the performance parameter, until a calculated seventh performance parameter meets the first preset tolerance requirement and flatness requirement and a calculated eighth performance parameter meets the second preset tolerance requirement and flatness requirement, where the seventh performance parameter is related to the new service wavelength, and the eighth performance parameter is related to the existing service wavelength; at this time, obtain the modified fifth power attenuation value and sixth power attenuation value, and then regulate the power attenuation value of the power regulation unit related to the new service wavelength to make the power attenuation value reach the fifth power attenuation value, and regulate the power attenuation value of the power regulation unit related to the existing service wavelength to make the power attenuation value reach the sixth power attenuation value.

This embodiment is for an application scenario in which a new service wavelength is added to the optical network and there is an existing service wavelength in the optical network. Compared with the prior art, this embodiment does not depend on a performance detection unit, thereby effectively reducing network costs. In addition, in this embodiment, a proper power attenuation value is determined by setting an empirical value or in a manner of iterative modification, thereby ensuring that performance of the service wavelength in the optical network meets the performance requirements and at the same time, improving the efficiency and accuracy of regulating the optical power.

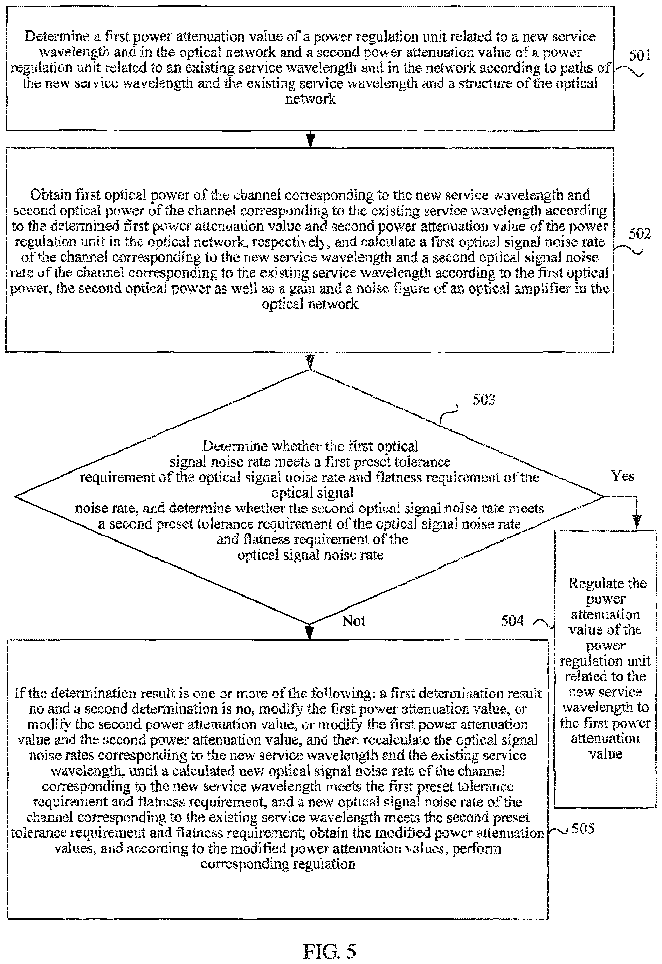

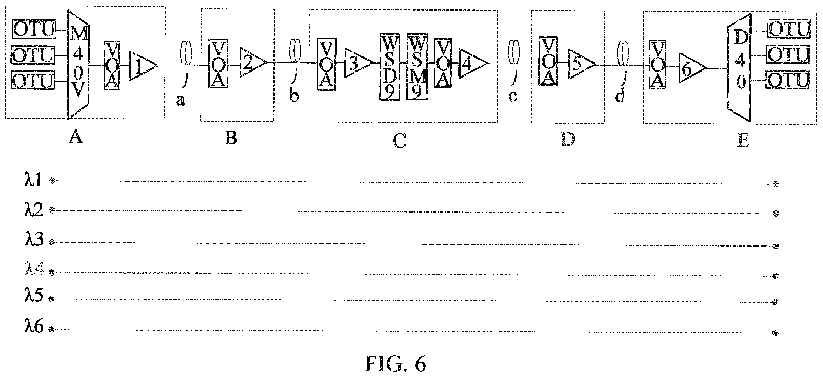

FIG. 5 is a flow chart of Embodiment 4 of a method for regulating optical power according to the present invention; as shown in FIG. 5, this embodiment provides a method for regulating optical power. FIG. 6 is a schematic diagram of a topological structure of an optical network in Embodiment 4 of the method for regulating optical power according to the present invention; as shown in FIG. 6, the method for regulating optical power according to this embodiment is specifically described through a scenario shown in FIG. 6, which is taken as an example. The network configuration in FIG. 6 is consistent with that in foregoing FIG. 3. Based on the foregoing Embodiment 2, new service wavelengths are added in this embodiment, that is, based on the opened three service wavelengths λ1, λ2, and λ3 in the optical network, the optical network is expanded and three new service wavelengths λ4, λ5, and λ6 are opened, and performance requirements include: the opened new service wavelengths should not have negative effects on the existing service performance.

Specifically, the method for regulating optical power according to this embodiment may specifically include the following steps.

Step 501: Determine a first power attenuation value of a power regulation unit related to a new service wavelength and in an optical network and a second power attenuation value of the power regulation unit related to an existing service wavelength and in the network according to paths of the new service wavelength and the existing service wavelength and a structure of the optical network. This step is similar to the foregoing step 401, and details are not described herein again.

Step 502: Obtain first optical power of the channel corresponding to the new service wavelength and second optical power of the channel corresponding to the existing service wavelength according to the determined first power attenuation value and second power attenuation value of the power regulation unit in the optical network, respectively, and calculate a first optical signal noise rate of the channel corresponding to the new service wavelength and a second optical signal noise rate of the channel corresponding to the existing service wavelength according to the first optical power, the second optical power as well as a gain and a noise figure of an optical amplifier in the optical network.

After the first power attenuation value and the second power attenuation value of the power regulation unit in the optical network are obtained, the first optical power of the channel corresponding to the new service wavelength and the second optical power of the channel corresponding to the existing service wavelength are obtained according to a location relationship of units in the optical network as well as a path of each input service wavelength, a frequency of the service wavelength, and parameters of optical fibers and devices which the service wavelength passes through. The foregoing units may specifically include an OTU, an M40V, a VOA, a WSD9, a WSM9, and an optical amplifier, optical fiber parameters may be, for example, an optical fiber type and an optical fiber length, and device parameters may be, for example, a type and a gain spectrum of an EDFA board. In this embodiment, the optical network is expanded in a case in which there are existing service wavelengths (for example, the service wavelengths λ1, λ2, and λ3 in FIG. 6) in the optical network and the new service wavelengths (for example, the service wavelengths λ4, λ5, and λ6 in FIG. 6) are added in the optical network. At this time, not only the first optical power of the channel corresponding to a new service wavelength is obtained, but also the second optical power of the channel corresponding to an existing service wavelength is obtained after the new service wavelength is assumedly opened. After the first optical power and the second optical power are obtained, if the gain and the noise figure of the optical amplifier are known, a first optical signal noise rate of the channel corresponding to the new service wavelength and a second optical signal noise rate of the channel corresponding to the existing service wavelength can be calculated accordingly. Therefore, in this embodiment, for example, a device model can be established for the optical amplifier; it may be assumed that gain spectrum and noise spectrum models of the optical amplifier are known, the optical signal noise rates of the three channels corresponding to the existing service wavelengths λ1, λ2, and λ3 and the optical signal noise rates of the three channels corresponding to the new service wavelengths λ4, λ5, and λ6 are calculated according to gain spectrum and noise spectrum models of each optical amplifier.

Step 503: Determine whether the first optical signal noise rate meets a first preset tolerance requirement of the optical signal noise rate and flatness requirement of the optical signal noise rate, and determine whether the second optical signal noise rate meets a second preset tolerance requirement of the optical signal noise rate and flatness requirement of the optical signal noise rate; if a judgment result is yes, perform step 504, and if the judgment result is no, perform step 505.

In this embodiment, the first optical signal noise rate of the channel corresponding to the new service wavelength and the second optical signal noise rate of the channel corresponding to the existing service wavelength, which are calculated in foregoing step 502, are used as performance parameters for evaluating the performance of the channels. For example, it is preset that a tolerance value of an optical signal noise rate corresponding to the new service wavelength and a tolerance value of an optical signal noise rate corresponding to the existing service wavelength are not smaller than 15 dB, and a flatness of an optical signal noise rate corresponding to the new service wavelength and a flatness of an optical signal noise rate corresponding to the existing service wavelength are smaller than 1 dB.

Step 504: Regulate the power attenuation value of the power regulation unit related to the new service wavelength to the first power attenuation value.

If the first optical signal noise rate, obtained based on the first power attenuation value, of the channel corresponding to the new service wavelength meets the first preset tolerance requirement of the optical signal noise rate and flatness requirement of the optical signal noise rate, and the second optical signal noise rate, obtained based on the second power attenuation value, of the channel corresponding to the existing service wavelength meets the second preset tolerance requirement of the optical signal noise rate and flatness requirement of the optical signal noise rate, the power attenuation value of the power regulation unit related to the new service wavelength is directly regulated to the first power attenuation value.

Step 505: The judgment result is one or more of the following: the first optical signal noise rate does not meet the first preset tolerance requirement of the optical signal noise rate and flatness requirement of the optical signal noise rate, and the second optical signal noise rate does not meet the second preset tolerance requirement of the optical signal noise rate and flatness requirement of the optical signal noise rate, this embodiment may modify the first power attenuation value or may modify the second power attenuation value, or may modify the first power attenuation value and the second power attenuation value, and then recalculate the optical signal noise rates corresponding to the new service wavelength and the existing service wavelength, until a calculated optical signal noise rate of the channel corresponding to the new service wavelength meets the first preset tolerance requirement and flatness requirement, and a new optical signal noise rate of the channel corresponding to the existing service wavelength meets the second preset tolerance requirement and flatness requirement; obtain the modified power attenuation values, and according to the modified power attenuation values, perform the following corresponding regulation: regulating the power attenuation value of the power regulation unit related to the new service wavelength to the modified power attenuation value, or regulating the power attenuation value of the power regulation unit related to the existing service wavelength to the modified power attenuation value, or regulating the power attenuation values of the power regulation units related to the new service wavelength and the existing service wavelength to the modified power attenuation values, respectively.

Specifically, if the first power attenuation value of the power regulation unit corresponding to the new service wavelength is modified, recalculate, according to the modified power attenuation value, the optical signal noise rates corresponding to the new service wavelength and the existing service wavelength, continue to determine whether the recalculated optical signal noise rate of the channel corresponding to the new service wavelength meets the first preset tolerance requirement of the optical signal noise rate and flatness requirement of the optical signal noise rate, and whether the recalculated optical signal noise rate of the channel corresponding to the existing service wavelength meets the second preset tolerance requirement of the optical signal noise rate and flatness requirement of the optical signal noise rate; if anyone is not met, return to modify the power attenuation value of the power regulation unit corresponding to the new service wavelength, until a calculated third optical signal noise rate can meet the first preset tolerance requirement of the optical signal noise rate and flatness requirement of the optical signal noise rate and a calculated fourth optical signal noise rate meets the second preset tolerance requirement of the optical signal noise rate and flatness requirement of the optical signal noise rate, where the third optical signal noise rate is related to the new service wavelength, and the fourth optical signal noise rate is related to the existing service wavelength; at this time, obtain a modified third power attenuation value, and regulate the power attenuation value of the power regulation unit related to the new service wavelength to make the power attenuation value reach the third power attenuation value.

If the second power attenuation value of the power regulation unit corresponding to the existing service wavelength is modified, recalculate, according to the modified power attenuation value, the optical signal noise rates corresponding to the new service wavelength and the existing service wavelength, continue to determine whether the recalculated optical signal noise rate of the channel corresponding to the new service wavelength meets the first preset tolerance requirement of the optical signal noise rate and flatness requirement of the optical signal noise rate, and whether the recalculated optical signal noise rate of the channel corresponding to the existing service wavelength meets the second preset tolerance requirement of the optical signal noise rate and flatness requirement of the optical signal noise rate; if anyone is not met, return to modify the power attenuation value of the power regulation unit corresponding to the existing service wavelength, until a calculated fifth optical signal noise rate can meet the first preset tolerance requirement of the optical signal noise rate and flatness requirement of the optical signal noise rate and a calculated sixth optical signal noise rate can meet the second preset tolerance requirement of the optical signal noise rate and flatness requirement of the optical signal noise rate, where the fifth optical signal noise rate is related to the new service wavelength, and the sixth optical signal noise rate is related to the existing service wavelength; at this time, obtain a modified fourth power attenuation value, and regulate the power attenuation value of the power regulation unit related to the existing service wavelength to make the power attenuation value reach the fourth power attenuation value.

If the first power attenuation value of the power regulation unit corresponding to the new service wavelength and the second power attenuation value of the power regulation unit corresponding to the existing service wavelength are modified, recalculate, according to the modified power attenuation values, the optical signal noise rates corresponding to the new service wavelength and the existing service wavelength, then continue to determine whether the recalculated optical signal noise rate of the channel corresponding to the new service wavelength meets the first preset tolerance requirement of the optical signal noise rate and flatness requirement of the optical signal noise rate, and whether the recalculated optical signal noise rate of the channel corresponding to the existing service wavelength meets the second preset tolerance requirement of the optical signal noise rate and flatness requirement of the optical signal noise rate; if anyone is not met, return to modify the power attenuation value of the power regulation unit corresponding to the new service wavelength and the power attenuation value of the power regulation unit corresponding to the existing service wavelength, until a calculated seventh optical signal noise rate meets the first preset tolerance requirement of the optical signal noise rate and flatness requirement of the optical signal noise rate and a calculated eighth optical signal noise rate meets the second preset tolerance requirement of the optical signal noise rate and flatness requirement of the optical signal noise rate, where the seventh optical signal noise rate is related to the new service wavelength, and the eighth optical signal noise rate is related to the existing service wavelength; at this time, obtain a modified fifth power attenuation value and sixth power attenuation value, where the fifth power attenuation value is related to the new service wavelength and the sixth power attenuation value is related to the existing service wavelength; regulate the power attenuation value of the power regulation unit related to the new service wavelength to make the power attenuation value reach the fifth power attenuation value, and regulate the power attenuation value of the power regulation unit related to the existing service wavelength to make the power attenuation value reach the sixth power attenuation value.

In this embodiment, for a case in which a size of a network is great and the number of wavelengths is great, the power attenuation value corresponding to the optical signal noise rate meeting requirements can also be obtained through the foregoing iteration process, so as to implement the regulation of the optical power.

This embodiment is for an application scenario in which a new service wavelength is added to the optical network and there is an existing service wavelength in the optical network. Compared with the prior art, this embodiment does not depend on a performance detection unit, thereby effectively reducing network costs. In addition, in this embodiment, a proper power attenuation value is determined by setting an empirical value or in a manner of iterative modification, thereby ensuring that performance of the service wavelength in the optical network meets the performance requirements and at the same time, improving the efficiency and accuracy of regulating the optical power.

Those of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk or an optical disk.

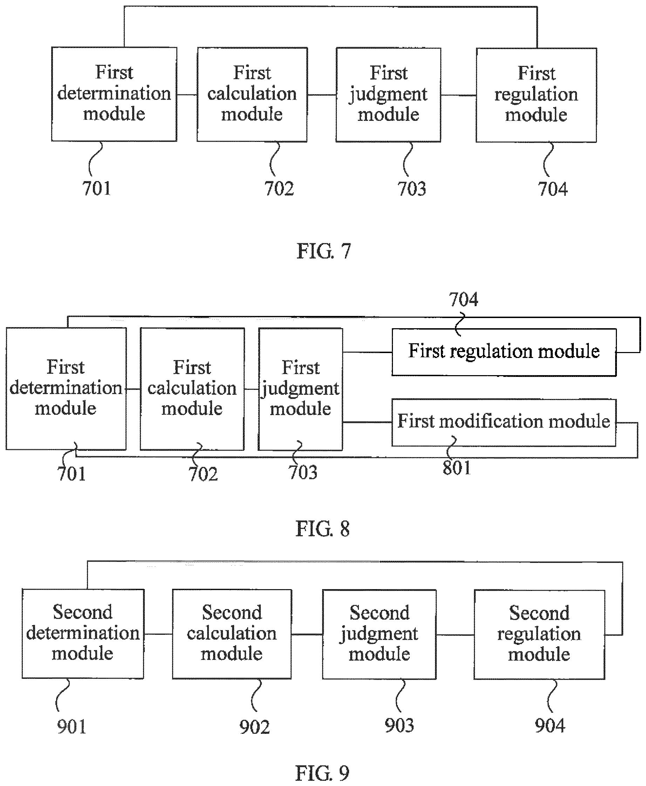

FIG. 7 is a structural diagram of Embodiment 1 of an apparatus for regulating optical power according to the present invention. As shown in FIG. 7, the embodiment provides an apparatus for regulating optical power, and the apparatus for regulating optical power according to this embodiment is located in an optical network, where a new service wavelength is added in the optical network and there is no existing service wavelength in the optical network. The apparatus for regulating optical power may specifically include a first determination module 701, a first calculation module 702, a first judgment module 703, and a first regulation module 704. The first determination module 701 is configured to determine a first power attenuation value of a power regulation unit related to a new service wavelength and in an optical network, according to a path of the new service wavelength and a structure of the optical network. The first calculation module 702 is configured to calculate a performance parameter of a channel corresponding to the new service wavelength according to the first power attenuation value. The first judgment module 703 is configured to determine whether the performance parameter of the channel corresponding to the new service wavelength meets a preset tolerance requirement and flatness requirement. The first regulation module 704 is configured to regulate a power attenuation value of the power regulation unit related to the new service wavelength to the first power attenuation value if a judgment result of the first judgment module 703 is yes.

For the apparatus for regulating optical power according this embodiment, a processing mechanism of regulating the optical power by using the foregoing modules is the same as the implementation process of Embodiment 1 of the foregoing method; for details, reference may be made to the foregoing related method embodiment, and the details are not described herein again.

FIG. 8 is a structural diagram of Embodiment 2 of an apparatus for regulating optical power according to the present invention. As shown in FIG. 8, this embodiment provides an apparatus for regulating optical power. Based on what is shown in foregoing FIG. 7, the apparatus for regulating optical power according to this embodiment may further include a first modification module 801, where the first modification module 801 is configured to modify the first power attenuation value if the judgment result of the first judgment module 703 is no. The first calculation module 702 is further configured to recalculate the performance parameter, until the calculated performance parameter meets the preset tolerance requirement and flatness requirement. The first determination module 701 is further configured to obtain a modified second power attenuation value. The first regulation module 704 is further configured to regulate the power attenuation value of the power regulation unit related to the new service wavelength to the second power attenuation value.

Specifically, the performance parameter in this embodiment may include one or more of the following: an optical signal noise rate, an optical signal noise rate margin, a bit error rate, and a Q factor.

More specifically, the performance parameter in this embodiment includes an optical signal noise rate. The first calculation module 702 is specifically configured to obtain optical power of the channel corresponding to the new service wavelength according to the first power attenuation value, and calculate the optical signal noise rate of the channel corresponding to the new service wavelength according to the optical power as well as a gain and a noise figure of an optical amplifier in the optical network. The first judgment module 703 is specifically configured to determine whether the optical signal noise rate meets a preset tolerance requirement of the optical signal noise rate and flatness requirement of the optical signal noise rate.

For the apparatus for regulating optical power according this embodiment, a processing mechanism of regulating the optical power by using the foregoing modules is the same as the implementation process of Embodiments 1 and 2 of the foregoing method; for details, reference may be made to the foregoing related method embodiments, and the details are not described herein again.

This embodiment is for an application scenario in which a new service wavelength is added in the optical network and there is no existing service wavelength in the optical network. Compared with the prior art, this embodiment does not depend on a performance detection unit, thereby effectively reducing network costs. In addition, in this embodiment, a proper power attenuation value is determined by setting an empirical value or in a manner of iterative modification, thereby ensuring that performance of the service wavelength in the optical network meets performance requirements and at the same time, improving the efficiency and accuracy of regulating the optical power.

FIG. 9 is a structural diagram of Embodiment 3 of an apparatus for regulating optical power according to the present invention. As shown in FIG. 9, the embodiment provides an apparatus for regulating optical power, and the apparatus for regulating optical power according to this embodiment is specifically located in an optical network, where a new service wavelength is added in the optical network and there is an existing service wavelength in the optical network. The apparatus for regulating optical power may specifically include a second determination module 901, a second calculation module 902, a second judgment module 903, and a second regulation module 904. The second determination module 901 is configured to determine a first power attenuation value of a power regulation unit related to a new service wavelength and in an optical network and a second power attenuation value of a power regulation unit related to an existing service wavelength and in the optical network according to paths of the new service wavelength and the existing service wavelength and a structure of the optical network. The second calculation module 902 is configured to calculate a first performance parameter of a channel corresponding to the new service wavelength and a second performance parameter of a channel corresponding to the existing service wavelength according to the first power attenuation value and the second power attenuation value, respectively. The second judgment module 903 is configured to determine whether the first performance parameter meets a first preset tolerance requirement and flatness requirement, and determine whether the second performance parameter meets a second preset tolerance requirement and flatness requirement. The second regulation module 904 is configured to regulate the power attenuation value of the power regulation unit related to the new service wavelength to the first power attenuation value if both a first judgment result and a second judgment result of the second judgment module 903 are yes.

For the apparatus for regulating optical power according this embodiment, a processing mechanism of regulating the optical power by using the foregoing modules is the same as the implementation process of Embodiment 3 of the foregoing method; for details, reference may be made to the foregoing related method embodiment, and the details are not described herein again.

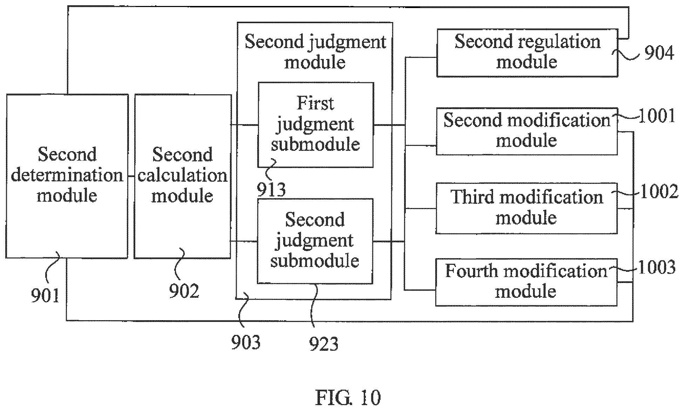

FIG. 10 is a structural diagram of Embodiment 4 of an apparatus for regulating optical power according to the present invention. As shown in FIG. 10, this embodiment provides an apparatus for regulating optical power. Based on what is shown in foregoing FIG. 9, the apparatus for regulating optical power according to this embodiment may further include a second modification module 1001, where the second modification module 1001 is configured to modify the first power attenuation value if the judgment result of the second judgment module 903 is one or more of the following: the first judgment result is no and the second judgment result is no. The second calculation module 902 is further configured to recalculate the performance parameter until a calculated third performance parameter meets the first preset tolerance requirement and flatness requirement and a calculated fourth performance parameter meets the second preset tolerance requirement and flatness requirement. The second determination module 901 is further configured to obtain a modified third power attenuation value. The second regulation module 904 is further configured to regulate the power attenuation value of the power regulation unit related to the new service wavelength to the third power attenuation value.

Furthermore, the apparatus for regulating optical power according to this embodiment may further include a third modification module 1002, where the third modification module 1002 is configured to modify the second power attenuation value if the judgment result of the second judgment module 903 is one or more of the following: the first judgment result is no and the second judgment result is no. The second calculation module 902 is further configured to recalculate the performance parameter until a calculated fifth performance parameter meets the first preset tolerance requirement and flatness requirement and a calculated sixth performance parameter meets the second preset tolerance requirement and flatness requirement. The second determination module 901 is further configured to obtain a modified fourth power attenuation value. The second regulation module 904 is further configured to regulate the power attenuation value of the power regulation unit related to the existing service wavelength to the fourth power attenuation value.

Furthermore, the apparatus for regulating optical power according to this embodiment may further include a fourth modification module 1003, where the fourth modification module 1003 is configured to modify the first power attenuation value and the second power attenuation value if the judgment result of the second judgment module 903 is one or more of the following: the first judgment result is no and the second judgment result is no. The second calculation module 902 is further configured to recalculate the performance parameter until a calculated seventh performance parameter meets the first preset tolerance requirement and flatness requirement and a calculated eighth performance parameter meets the second preset tolerance requirement and flatness requirement. The second determination module 901 is further configured to obtain a modified fifth power attenuation value and sixth power attenuation value. The second regulation module 904 is further configured to regulate the power attenuation value of the power regulation unit related to the new service wavelength to the fifth power attenuation value and regulate the power attenuation value of the power regulation unit related to the existing service wavelength to the sixth power attenuation value.

Specifically, the performance parameter in this embodiment may include one or more of the following: an optical signal noise rate, an optical signal noise rate margin, a bit error rate, and a Q factor.

More specifically, the performance parameter in this embodiment specifically includes an optical signal noise rate; the second calculation module 902 is specifically configured to obtain first optical power of the channel corresponding to the new service wavelength and second optical power of the channel corresponding to the existing service wavelength according to the first power attenuation value and the second power attenuation value, respectively, and calculate a first optical signal noise rate of the channel corresponding to the new service wavelength and a second optical signal noise rate of the channel corresponding to the existing service wavelength according to the first optical power, the second optical power as well as a gain and a noise figure imposed by an optical amplifier in the optical network on the service wavelength. The second judgment module 903 may specifically include a first determination submodule 913 and a second determination submodule 923. The first determination submodule 913 is configured to determine whether the first optical signal noise rate meets the first preset tolerance requirement of the optical signal noise rate and flatness requirement of the optical signal noise rate. The second determination submodule 923 is configured to determine whether the second optical signal noise rate meets the second preset tolerance requirement of the optical signal noise rate and flatness requirement of the optical signal noise rate.

For the apparatus for regulating optical power according this embodiment, a processing mechanism of regulating the optical power by using the foregoing modules is the same as the implementation process of Embodiments 3 and 4 of the foregoing method; for details, reference may be made to the foregoing related method embodiment, and the details are not described herein again.

This embodiment is for an application scenario in which a new service wavelength is added to the optical network and there is an existing service wavelength in the optical network. Compared with the prior art, this embodiment does not depend on a performance detection unit, thereby effectively reducing network costs. In addition, in this embodiment, a proper power attenuation value is determined by setting an empirical value or in a manner of iterative modification, thereby ensuring that performance of the service wavelength in the optical network meets performance requirements and at the same time, improving the efficiency and accuracy of regulating the optical power.

The device embodiments are merely exemplary. Units described as separate components may be or may not be physically separated. Components shown as units may be or may not be physical units, that is, may be located in one place or distributed to at least two network units. Some or all of the modules may be selected to achieve the objectives of the solutions of the embodiments according to actual demands. Persons of ordinary skill in the art can understand and implement the present invention without making creative efforts.

Finally, it should be noted that the above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not depart from the idea and scope of the present invention.

## Claims

1. A method for regulating optical power, wherein a new service wavelength is added in an optical network and there is an existing service wavelength in the optical network, the method comprising:
determining a first power attenuation value of a power regulation unit related to the new service wavelength and a second power attenuation value of a power regulation unit related to the existing service wavelength according to paths of the new service wavelength and the existing service wavelength and a structure of the optical network; and
calculating a first performance parameter of a channel corresponding to the new service wavelength and a second performance parameter of a channel corresponding to the existing service wavelength according to the first power attenuation value and the second power attenuation value, respectively, determining whether the first performance parameter meets a first preset tolerance requirement and flatness requirement and determining whether the second performance parameter meets a second preset tolerance requirement and flatness requirement; and regulating a power attenuation value of the power regulation unit related to the new service wavelength to the first power attenuation value if both a first judgment result and a second judgment result are yes.

2. The method according to claim 1, further comprising: if the first judgment result is no and/or the second judgment result is no, modifying the first power attenuation value and recalculating the performance parameter until a calculated third performance parameter meets the first preset tolerance requirement and flatness requirement and a calculated fourth performance parameter meets the second preset tolerance requirement and flatness requirement; and obtaining a modified third power attenuation value, and regulating the power attenuation value of the power regulation unit related to the new service wavelength to the third power attenuation value.

3. The method according to claim 1, further comprising: if the first judgment result is no and/or the second judgment result is no, modifying the second power attenuation value, and recalculating the performance parameter until a calculated fifth performance parameter meets the first preset tolerance requirement and flatness requirement and a calculated sixth performance parameter meets the second preset tolerance requirement and flatness requirement; and obtaining a modified fourth power attenuation value, and regulating a power attenuation value of the power regulation unit related to the existing service wavelength to the fourth power attenuation value.

4. The method according to claim 1, further comprising: if the first judgment result is no and/or the second judgment result is no, modifying the first power attenuation value and the second power attenuation value, and recalculating the performance parameter until a calculated seventh performance parameter meets the first preset tolerance requirement and flatness requirement and a calculated eighth performance parameter meets the second preset tolerance requirement and flatness requirement; and obtaining a modified fifth power attenuation value and sixth power attenuation value, regulating the power attenuation value of the power regulation unit related to the new service wavelength to the fifth power attenuation value, and regulating a power attenuation value of the power regulation unit related to the existing service wavelength to the sixth power attenuation value.

5. The method according to any one of claims 1 to 4, wherein the performance parameter comprises the optical signal to noise rate;
the calculating the first performance parameter of the channel corresponding to the new service wavelength and the second performance parameter of the channel corresponding to the existing service wavelength according to the first power attenuation value and the second power attenuation value, respectively comprises: obtaining first optical power of the channel corresponding to the new service wavelength and second optical power of the channel corresponding to the existing service wavelength according to the first power attenuation value and the second power attenuation value, respectively, and calculating a first optical signal to noise rate of the channel corresponding to the new service wavelength and a second optical signal to noise rate of the channel corresponding to the existing service wavelength according to the first optical power, the second optical power, and a gain and a noise figure imposed by an optical amplifier in the optical network on a service wavelength;
the determining whether the first performance parameter meets the first preset tolerance requirement and flatness requirement comprises: determining whether the first optical signal to noise rate meets a first preset tolerance requirement of the optical signal to noise rate and flatness requirement of the optical signal to noise rate; and
the determining whether the second performance parameter meets the second preset tolerance requirement and flatness requirement comprises: determining whether the second optical signal to noise rate meets a second preset tolerance requirement of the optical signal to noise rate and flatness requirement of the optical signal to noise rate.

6. An apparatus for regulating optical power, wherein the apparatus is located in an optical network, a new service wavelength is added in the optical network and there is an existing service wavelength in the optical network, the apparatus comprising:
a determination module, configured to determine a first power attenuation value of a power regulation unit related to the new service wavelength and in the optical network and a second power attenuation value of the power regulation unit related to the existing service wavelength and in the optical network according to paths of the new service wavelength and the existing service wavelength and a structure of the optical network;
a calculation module, configured to calculate a first performance parameter of a channel corresponding to the new service wavelength and a second performance parameter of a channel corresponding to the existing service wavelength according to the first power attenuation value and the second power attenuation value, respectively;
a judgment module, configured to determine whether the first performance parameter meets a first preset tolerance requirement and flatness requirement, and determine whether the second performance parameter meets a second preset tolerance requirement and flatness requirement; and
a regulation module, configured to regulate a power attenuation value of the power regulation unit related to the new service wavelength to the first power attenuation value if both a first judgment result and a second judgment result of the second judgment module are yes.

7. The apparatus according to claim 6, further comprising:
a modification module, configured to modify the first power attenuation value if a judgment result of the judgment module is the first judgment result is no and/or the second judgment result is no; wherein
the calculation module is further configured to recalculate the performance parameter until a calculated third performance parameter meets the first preset tolerance requirement and flatness requirement and a calculated fourth performance parameter meets the second preset tolerance requirement and flatness requirement;
the determination module is further configured to obtain a modified third power attenuation value; and
the regulation module is further configured to regulate the power attenuation value of the power regulation unit related to the new service wavelength to the third power attenuation value.

8. The apparatus according to claim 6, further comprising:
if the first judgment result is no and/or the second judgment result is no;
the calculation module is further configured to recalculate the performance parameter until a calculated fifth performance parameter meets the first preset tolerance requirement and flatness requirement and a calculated sixth performance parameter meets the second preset tolerance requirement and flatness requirement;
the determination module is further configured to obtain a modified fourth power attenuation value; and
the regulation module is further configured to regulate a power attenuation value of the power regulation unit related to the existing service wavelength to the fourth power attenuation value.

9. The apparatus according to claim 6, further comprising:
if the first judgment result is no and/or the second judgment result is no;
the calculation module is further configured to recalculate the performance parameter until a calculated seventh performance parameter meets the first preset tolerance requirement and flatness requirement and a calculated eighth performance parameter meets the second preset tolerance requirement and flatness requirement;
the determination module is further configured to obtain a modified fifth power attenuation value and sixth power attenuation value; and
the regulation module is further configured to regulate the power attenuation value of the power regulation unit related to the new service wavelength to the fifth power attenuation value and regulate a power attenuation value of the power regulation unit related to the existing service wavelength to the sixth power attenuation value.

## Patentansprüche

1. Verfahren zum Regeln optischer Leistung, wobei eine neue Dienstwellenlänge in einem optischen Netzwerk hinzugefügt wird und es eine existierende Dienstwellenlänge in dem optischen Netzwerk gibt, wobei das Verfahren Folgendes umfasst:
Bestimmen eines ersten Leistungsdämpfungswerts einer Leistungsregelungseinheit in Bezug auf die neue Dienstwellenlänge und eines zweiten Leistungsdämpfungswerts einer Leistungsregelungseinheit in Bezug auf die existierende Dienstwellenlänge gemäß Pfaden der neuen Dienstwellenlänge und der existierenden Dienstwellenlänge und einer Struktur des optischen Netzwerks; und
Berechnen eines ersten Leistungsfähigkeitsparameters eines der neuen Dienstwellenlänge entsprechenden Kanals und eines zweiten Leistungsfähigkeitsparameters eines der existierenden Dienstwellenlänge entsprechenden Kanals gemäß dem ersten Leistungsdämpfungswert bzw. dem zweiten Leistungsdämpfungswert, Bestimmen, ob der erste Leistungsfähigkeitsparameter eine erste voreingestellte Toleranzanforderung und Flachheitsanforderung erfüllt und Bestimmen, ob der zweite Leistungsfähigkeitsparameter eine zweite voreingestellte Toleranzanforderung und Flachheitsanforderung erfüllt; und Regeln eines Leistungsdämpfungswerts der Leistungsregelungseinheit in Bezug auf die neue Dienstwellenlänge auf einen neuen Leistungsdämpfungswert, wenn sowohl ein erstes Beurteilungsergebnis als auch ein zweites Beurteilungsergebnis ja sind.

2. Verfahren nach Anspruch 1, ferner umfassend: wenn das erste Beurteilungsergebnis nein ist und/oder das zweite Beurteilungsergebnis nein ist, Modifizieren des ersten Leistungsdämpfungswerts und Neuberechnen des Leistungsfähigkeitsparameters, bis ein dritter berechneter Leistungsfähigkeitsparameter die erste voreingestellte Toleranzanforderung und Flachheitsanforderung erfüllt und ein vierter berechneter Leistungsfähigkeitsparameter die zweite voreingestellte Toleranzanforderung und Flachheitsanforderung erfüllt; und Erhalten eines modifizierten dritten Leistungsdämpfungswerts und Regeln des Leistungsdämpfungswerts der Leistungsregelungseinheit in Bezug auf die neue Dienstwellenlänge auf den dritten Leistungsdämpfungswert.

3. Verfahren nach Anspruch 1, ferner umfassend: wenn das erste Beurteilungsergebnis nein ist und/oder das zweite Beurteilungsergebnis nein ist, Modifizieren des zweiten Leistungsdämpfungswerts und Neuberechnen des Leistungsfähigkeitsparameters, bis ein berechneter fünfter Leistungsfähigkeitsparameter die erste voreingestellte Toleranzanforderung und Flachheitsanforderung erfüllt und ein berechneter sechster Leistungsfähigkeitsparameter die zweite voreingestellte Toleranzanforderung und Flachheitsanforderung erfüllt; und Erhalten eines modifizierten vierten Leistungsdämpfungswerts und Regeln eines Leistungsdämpfungswerts der Leistungsregelungseinheit in Bezug auf die existierende Dienstwellenlänge auf den vierten Leistungsdämpfungswert.

4. Verfahren nach Anspruch 1, ferner umfassend: wenn das erste Beurteilungsergebnis nein ist und/oder das zweite Beurteilungsergebnis nein ist, Modifizieren des ersten Leistungsdämpfungswerts und des zweiten Leistungsdämpfungswerts und Neuberechnen des Leistungsfähigkeitsparameters, bis ein berechneter siebter Leistungsfähigkeitsparameter die erste voreingestellte Toleranzanforderung und Flachheitsanforderung erfüllt und ein berechneter achter Leistungsfähigkeitsparameter die zweite voreingestellte Toleranzanforderung und Flachheitsanforderung erfüllt; und Erhalten eines modifizierten fünften Leistungsdämpfungswerts und sechsten Leistungsdämpfungswerts, Regeln des Leistungsdämpfungswerts der Leistungsregelungseinheit in Bezug auf die neue Dienstwellenlänge auf den fünften Leistungsdämpfungswert und Regeln eines Leistungsdämpfungswerts der Leistungsregelungseinheit in Bezug auf die existierende Dienstwellenlänge auf den sechsten Leistungsdämpfungswert.

5. Verfahren nach einem der Ansprüche 1 bis 4, wobei der Leistungsfähigkeitsparameter den optischen Rauschabstand umfasst;
das Berechnen des ersten Leistungsfähigkeitsparameters des der neuen Dienstwellenlänge entsprechenden Kanals und des zweiten Leistungsfähigkeitsparameters des der existierenden Dienstwellenlänge entsprechenden Kanals gemäß dem ersten Leistungsdämpfungswert bzw. dem zweiten Leistungsdämpfungswert Folgendes umfasst: Erhalten der ersten optischen Leistung des der neuen Dienstwellenlänge entsprechenden Kanals und der zweiten optischen Leistung des der existierenden Dienstwellenlänge entsprechenden Kanals gemäß dem ersten Leistungsdämpfungswert bzw. dem zweiten Leistungsdämpfungswert und Berechnen eines ersten optischen Rauschabstands des der neuen Dienstwellenlänge entsprechenden Kanals und eines zweiten optischen Rauschabstands des der existierenden Dienstwellenlänge entsprechenden Kanals gemäß der ersten optischen Leistung, der zweiten optischen Leistung, sowie einem Verstärkungsfaktor und einer Rauschzahl implementiert durch einen optischen Verstärker in dem optischen Netzwerk auf eine Dienstwellenlänge;
das Bestimmen, ob der erste Leistungsfähigkeitsparameter die erste voreingestellte Toleranzanforderung und Flachheitsanforderung erfüllt, Folgendes umfasst:
Bestimmen, ob der erste optische Rauschabstand eine erste voreingestellte Toleranzanforderung des optischen Rauschabstands und Flachheitsanforderung des optischen Rauschabstands erfüllt; und
das Bestimmen, ob der zweite Leistungsfähigkeitsparameter die zweite voreingestellte Toleranzanforderung und Flachheitsanforderung erfüllt, Folgendes umfasst: Bestimmen, ob der zweite optische Rauschabstand eine zweite voreingestellte Toleranzanforderung des optischen Rauschabstands und Flachheitsanforderung des optischen Rauschabstands erfüllt.

6. Vorrichtung zum Regeln optischer Leistung, wobei sich die Vorrichtung in einem optischen Netzwerk befindet, eine neue Dienstwellenlänge in dem optischen Netzwerk hinzugefügt wird und es eine existierende Dienstwellenlänge in dem optischen Netzwerk gibt, wobei die Vorrichtung Folgendes umfasst:
ein Bestimmungsmodul, ausgelegt zum Bestimmen eines ersten Leistungsdämpfungswerts einer Leistungsregelungseinheit in Bezug auf die neue Dienstwellenlänge und in dem optischen Netzwerk und eines zweiten Leistungsdämpfungswerts der Leistungsregelungseinheit in Bezug auf die existierende Dienstwellenlänge und in dem optischen Netzwerk gemäß Pfaden der neuen Dienstwellenlänge und der existierenden Dienstwellenlänge und einer Struktur des optischen Netzwerks;
ein Berechnungsmodul, ausgelegt zum Berechnen eines ersten Leistungsfähigkeitsparameters eines der neuen Dienstwellenlänge entsprechenden Kanals und eines zweiten Leistungsfähigkeitsparameters eines der existierenden Dienstwellenlänge entsprechenden Kanals gemäß dem ersten Leistungsdämpfungswert bzw. dem zweiten Leistungsdämpfungswert,
ein Beurteilungsmodul, ausgelegt zum Bestimmen, ob der erste Leistungsfähigkeitsparameter eine erste voreingestellte Toleranzanforderung und Flachheitsanforderung erfüllt und Bestimmen, ob der zweite Leistungsfähigkeitsparameter eine zweite voreingestellte Toleranzanforderung und Flachheitsanforderung erfüllt; und
ein Regelungsmodul, ausgelegt zum Regeln eines Leistungsdämpfungswerts der Leistungsregelungseinheit in Bezug auf die neue Dienstwellenlänge auf einen neuen Leistungsdämpfungswert, wenn sowohl ein erstes Beurteilungsergebnis als auch ein zweites Beurteilungsergebnis ja sind.

7. Vorrichtung nach Anspruch 6, ferner umfassend:
ein Modifikationsmodul, ausgelegt zum Modifizieren des ersten Leistungsdämpfungswerts, wenn ein Beurteilungsergebnis des Beurteilungsmoduls das erste Beurteilungsergebnis ist nein ist und/oder das zweite Beurteilungsergebnis nein ist; wobei
das Berechnungsmodul ferner ausgelegt ist zum Neuberechnen des Leistungsfähigkeitsparameters, bis ein dritter berechneter Leistungsfähigkeitsparameter die erste voreingestellte Toleranzanforderung und Flachheitsanforderung erfüllt;
das Bestimmungsmodul ferner ausgelegt ist zum Erhalten eines modifizierten dritten Leistungsdämpfungswerts; und
das Regelungsmodul ferner ausgelegt ist zum Regeln des Leistungsdämpfungswerts der Leistungsregelungseinheit in Bezug auf die neue Dienstwellenlänge auf den dritten Leistungsdämpfungswert.

8. Vorrichtung nach Anspruch 6, ferner umfassend:
wenn das erste Beurteilungsergebnis nein ist und/oder das zweite Beurteilungsergebnis nein ist,
das Berechnungsmodul ferner ausgelegt ist zum Neuberechnen des Leistungsfähigkeitsparameters, bis ein berechneter fünfter Leistungsfähigkeitsparameter die erste voreingestellte Toleranzanforderung und Flachheitsanforderung erfüllt und ein berechneter sechster Leistungsfähigkeitsparameter die zweite voreingestellte Toleranzanforderung und Flachheitsanforderung erfüllt;
das Bestimmungsmodul ferner ausgelegt ist zum Erhalten eines modifizierten vierten Leistungsdämpfungswerts; und
das Regelungsmodul ferner ausgelegt ist zum Regeln eines Leistungsdämpfungswerts der Leistungsregelungseinheit in Bezug auf die existierende Dienstwellenlänge auf den vierten Leistungsdämpfungswert.

9. Vorrichtung nach Anspruch 6, ferner umfassend:
wenn das erste Beurteilungsergebnis nein ist und/oder das zweite Beurteilungsergebnis nein ist;
das Berechnungsmodul ferner ausgelegt ist zum Neuberechnen des Leistungsfähigkeitsparameters, bis ein berechneter siebter Leistungsfähigkeitsparameter die erste voreingestellte Toleranzanforderung und Flachheitsanforderung erfüllt und ein berechneter achter Leistungsfähigkeitsparameter die zweite voreingestellte Toleranzanforderung und Flachheitsanforderung erfüllt;
das Bestimmungsmodul ferner ausgelegt ist zum Erhalten eines modifizierten fünften Leistungsdämpfungswerts und sechsten Leistungsdämpfungswerts; und
das Regelungsmodul ferner ausgelegt ist zum Regeln des Leistungsdämpfungswerts der Leistungsregelungseinheit in Bezug auf die neue Dienstwellenlänge auf den fünften Leistungsdämpfungswert und Regeln eines Leistungsdämpfungswerts der Leistungsregelungseinheit in Bezug auf die existierende Dienstwellenlänge auf den sechsten Leistungsdämpfungswert.

## Revendications

1. Procédé de régulation de puissance optique, dans lequel une nouvelle longueur d'onde de service est ajoutée dans un réseau optique et il y a pas de longueur d'onde de service existante dans le réseau optique, le procédé comprenant :
la détermination d'une première valeur d'atténuation de puissance d'une unité de régulation de puissance liée à la nouvelle longueur d'onde de service et d'une deuxième valeur d'atténuation de puissance d'une unité de régulation de puissance liée à la longeur d'onde de service existante conformément à trajets de la nouvelle longueur d'onde de service et de la longeur d'onde de service existante et à une structure du réseau optique ; et
le calcul d'un premier paramètre de performances d'un canal correspondant à la nouvelle longueur d'onde de service et un deuxième paramètre de performances d'un channel correspondant à la longeur d'onde de service existante conformément à la première valeur d'atténuation de puissance et à la deuxième valeur d'atténuation de puissance, respectivement, la détermination du fait de savoir si le premier paramètre de performances respecte une première exigence de tolérance prédéfinie et une exigence de planéité et déterminer si le deuxième paramètre de performances respecte une deuxième exigence de tolérance prédéfinie et une exigence de planéité ;
et la régulation d'une valeur d'atténuation de puissance de l'unité de régulation de puissance liée à la nouvelle longueur d'onde de service à la première valeur d'atténuation de puissance si un premier résultat de jugement et un deuxième résultat de jugement sont tous les deux positifs.

2. Procédé selon la revendication 1, comprenant en outre : si le premier résultat du jugement est négatif et/ou le deuxième résultat de jugement est négatif , la modification de la première valeur d'atténuation de puissance, et le recalcul du paramètre de performances jusqu'à ce qu'un troisième paramètre de performances calculé respecte la première exigence de tolérance prédéfinie et l'exigence de planéité et qu'un quatrième paramètre de performances calculé respecte la deuxième exigence de tolérance prédéfinie et l'exigence de planéité; et l'obtention d'une troisième valeur d'atténuation de puissance modifiée, et la régulation de la valeur d'atténuation de puissance de l'unité de régulation de puissance liée à la nouvelle longueur d'onde de service à la troisième valeur d'atténuation de puissance.

3. Procédé selon la revendication 1, comprenant en outre: si le premier résultat de jugement est négatif et/ou si le deuxième résultat de jugement est négatif, la modification de la deuxième valeur d'atténuation de puissance, et le recalcul du paramètre de performances jusqu'à ce qu'un cinquième paramètre de performances calculé respecte la première exigence de tolérance prédéfinie et l'exigence de planéité et qu'un sixième paramètre de performances calculé respecte la deuxième exigence de tolérance prédéfinie et l'exigence de planéité ; et l'obtention d'une quatrième valeur d'atténuation de puissance modifiée, et la régulation d'une valeur d'atténuation de puissance de l'unité de régulation de puissance liée à la longueur d'onde de service existante à la quatrième valeur d'atténuation de puissance.

4. Procédé selon la revendication 1, comprenant en outre : si le premier résultat du premier jugement est négatif et/ou si le deuxième résultat de jugement est négatif, la modification de la première valeur d'atténuation de puissance et de la deuxième valeur d'atténuation de puissance, et le recalcul du paramètre de performances jusqu'à ce qu'un septième paramètre de performances calculé respecte la première exigence de tolérance prédéfinie et l'exigence de planéité et qu'un huitième paramètre de performances calculé respecte la deuxième exigence de tolérance prédéfinie et l'exigence de planéité ; et l'obtention d'une cinquième valeur d'atténuation de puissance et d'une sixième valeur d'atténuation modifiées, la régulation de la valeur d'atténuation de puissance de l'unité de régulation de puissance liée à la nouvelle longueur d'onde de service à la cinquième valeur d'atténuation de puissance, et la régulation d'une valeur d'atténuation de puissance de l'unité de régulation de puissance liée à la longueur d'onde de service existante à la sixième valeur d'atténuation de puissance.

5. Procéde selon l'une quelconque des revendications 1 à 4, dans lequel le paramètre de performances comprend le rapport signal à bruit optique;
le calcul du premier paramètre de performances du canal correspondant à la nouvelle longueur d'onde de service et du deuxième paramètre de performances du canal correspondant à la longeur d'onde de service existante conformément à la première valeur d'atténuation de puissance et à la deuxième valeur d'atténuation de puissance, respectivement comprend : l'obtention de la première puissance optique du canal correspondant à la nouvelle longueur d'onde de service et de la deuxième puissance optique du canal correspondant à la longeur d'onde de service existante conformément à la première valeur d'atténuation de puissance et à la deuxième valeur d'atténuation de puissance, respectivement, et le calcul d'un premier rapport signal à bruit optique du canal correspondant à la nouvelle longueur d'onde de service et d'un deuxième rapport signal à bruit optique du canal correspondant à la longeur d'onde de service existante conformément à la première puissance optique, à la deuxième puissance optique, ainsi qu'à un gain et à un facteur de bruit imposé par un amplificateur optique dans le réseau optique sur une longeur d'onde de service ;
la détermination du fait de savoir si le premier paramètre de performances respecte la première exigence de tolérance prédéfinie et l'exigence de planéité comprend : la détermination du fait de savoir si le premier rapport signal à bruit optique respecte une première exigence de tolérance prédéfinie du rapport signal à bruit optique et une exigence de planéité du rapport signal à bruit optique ; et la détermination du fait de savoir si le deuxième paramètre de performances respecte la deuxième exigence de tolérance prédéfinie et l'exigence de planéité comprend : la détermination du fait de savoir si le deuxième rapport signal à bruit optique respecte une deuxième exigence de tolèrance prédéfinie du rapport signal à bruit optique et l'exigence de planéité du rapport signal à bruit optique.

6. Appareil de régulation de puissance optique, dans lequel l'appareil est situé dans un réseau optique, une nouvelle longueur d'onde de service est ajoutée dans le réseau optique et il y a une de longueur d'onde de service existante dans le réseau optique, l'appareil comprenant :
un module de détermination configuré pour déterminer une première valeur d'atténuation de puissance d'une unité de régulation de puissance liée à la nouvelle longueur d'onde de service et dans le réseau optique et une deuxième valeur d'atténtion de puissance de l'unité de regulation liée à la longeur d'onde de service existante et dans le réseau optique conformément à des trajets de la nouvelle longueur d'onde de service et de la longeur d'onde de service existante et à une structure du réseau optique ;
un module de calcul, configuré pour calculer un premier paramètre de performances d'un canal correspondant à la nouvelle longueur d'onde de service et un deuxième paramètre de performances d'un channel correspondant à la longeur d'onde de service existante conformément à la première valeur d'atténuation de puissance et à la deuxième valeur d'atténtuation de puissance, respectivement,
un module de jugement configuré pour déterminer si le premier paramètre de performances respecte une première exigence de tolérance prédéfinie et une exigence de planéité, et déterminer si le deuxième paramètre de performances respecte une deuxième exigence de tolérance prédéfinie et une exigence de planéité; et
un module de régulation, configuré pour réguler une valeur d'atténuation de puissance de l'unité de régulation de puissance liée à la nouvelle longueur d'onde de service à la première valeur d'atténuation de puissance si un premier résultat de jugement et un deuxième résultat de jugement du deuxième module de jugement sont tous les deux positifs.

7. Appareil selon la revendication 6, comprenant en outre :
un module de modification, configuré pour modifier la première valeur d'atténuation de puissance si un résultat du jugement du module de jugement est le premier résultat de jugement est négatif et/ou le deuxième résultat de jugement est négatif; dans lequel
le module de calcul est en outre configuré pour recalculer le paramètre de performances jusqu'à ce qu'un troisiéme paramètre de performances calculé respecte la première exigence de tolérance prédéfinie et l'exigence de planéité et qu'un quatrième paramètre de performances calculé respecte la deuxième exigence de tolérance prédéfinie et l'exigence de planéité;
le module de détermination est en outre configuré pour obtenir une troisième valeur d'atténuation de puissance modifiée ; et
le module de régulation est en outre configuré pour réguler la valeur d'atténuation de puissance de l'unité de régulation de puissance liée à la nouvelle longueur d'onde de service à la troisième valeur d'atténuation de puissance.

8. Appareil selon la revendication 6, comprenant en outre :
si le premier résultat de jugement est négatif et/ou si le deuxième résultat de jugement est négatif;
le module de calcul est en outre configuré pour recalculer le paramètre de performances jusqu'à ce qu'un cinquième paramètre de performances respecte la première exigence de tolérance prédéfinie et l'exigence de planéité et qu'un sixième paramètre de performances calculé respecte la deuxième exigence de tolérance prédéfinie et l'exigence de planéité ; et
le module de détermination est en outre configuré pour obtenir une quatrième valeur d'atténuation de puissance modifiée ; et
le module de régulation est en outre configuré pour réguler une valeur d'atténuation de puissance de l'unité de régulation de puissance liée à la longueur d'onde de service existante à la quatrième valeur d'atténuation de puissance.

9. Appareil selon la revendication 6, comprenant en outre :
si le premier résultat de jugement est négatif et/ou si le deuxième résultat de jugement est négatif;
le module de calcul est en outre configuré pour recalculer le paramètre de performances jusqu'à ce qu'un septième paramètre de performances respecte la première exigence de tolérance prédéfinie et l'exigence de planéité et qu'un huitième paramètre de performances calculé respecte la deuxième exigence de tolérance prédéfinie et l'exigence de planéité ; et
le module de détermination est en outre configuré pour obtenir une cinquième valeur d'atténuation de puissance et une sixième valeur d'atténuation de puissance ; et
le module de régulation est en outre configuré pour réguler la valeur d'atténuation de puissance de l'unité de régulation de puissance liée à la nouvelle longueur d'onde de service à la cinquième valeur d'atténuation de puissance et pour réguler une valeur d'atténuation de puissance de l'unité de régulation de puissance liée à la longueur d'onde de service existante à la sixième valeur d'atténuation de puissance.
